**Europäisches Patentamt**

**European Patent Office**

**Office européen des brevets**

(19)

(11) Veröffentlichungsnummer : **0 326 519 B1**

# (12) EUROPÄISCHE PATENTSCHRIFT

(45) Veröffentlichungstag der Patentschrift :
**25.11.92 Patentblatt 92/48**

(51) Int. Cl.$^5$ : **C03C 8/18**

(21) Anmeldenummer : **89810053.2**

(22) Anmeldetag : **23.01.89**

(54) **Emailzusammensetzungen für Beschichtungen.**

(30) Priorität : **29.01.88 US 150261**

(43) Veröffentlichungstag der Anmeldung :
**02.08.89 Patentblatt 89/31**

(45) Bekanntmachung des Hinweises auf die Patenterteilung :
**25.11.92 Patentblatt 92/48**

(84) Benannte Vertragsstaaten :
**DE ES FR GB IT NL SE**

(56) Entgegenhaltungen :
**FR-A- 2 112 115**

(56) Entgegenhaltungen :
**GB-A- 2 072 159**
**US-A- 4 420 501**
**CHEMICAL ABSTRACTS, Band 104, Nr. 18, 5. Mai 1986, Seite 352, Zusammenfassung Nr. 154517b, Columbus, Ohio, US; & JP-A-60251 150 (OKUNO CHEMICAL INDUSTRY CO., LTD) 11-12-1985**

(73) Patentinhaber : **CIBA-GEIGY AG**
**Klybeckstrasse 141**
**CH-4002 Basel (CH)**

(72) Erfinder : **Stotka, David M.**
**620 North Wade Avenue**
**Washington Pennsylvania 15301 (US)**

## Beschreibung

Emailzusammensetzungen für Beschichtungen sind in Fachkreisen wohl bekannt. Solche Materialien können für verschiedene Applikationen Verwendung finden, werden aber vor allem zur Dekoration von Glasscheiben eingesetzt. Sie werden z.B. zur Bildung von Ränder um die Kanten von Glasscheiben, die zu Windschutzscheiben, Seitenfenstern und Heckscheiben von Kraftfahrzeugen verformt werden, eingesetzt.

Es ist allerdings beobachtet worden, dass wenn Glasscheiben, die mit den obenerwähnten Emailmaterialien gemäss dem Stand der Technik beschichtet sind, einer Verformung bei hohen Temperaturen unterworfen werden, die Beschichtungsmasse mit den die Gussform überziehenden Materialien zu verkleben neigt. Solche Emails sind also nicht geeignet für die Beschichtung von Glasscheiben, die einer Verformung durch Erhitzen in im allgemeinen mit Glasfasern überzogenen Gussformen unterworfen werden müssen.

Es sind verschiedene Lösungen vorgeschlagen worden. In der US-PS 4 596 590 wird der Zusatz eines Metalloxidpulvers, z.B. Fe-(II)-Oxid, zur Emailzusammensetzung als Antiklebmittel vorgeschlagen. Die US-PS 4 684 388 und die US-PS 4 684 389 schlagen ähnliche Lösungen vor: Die erstgenannte Patentschrift beschreibt den Zusatz von feinverteiltem metallischem Zinkpulver und feinverteiltem Sn-(II)-Oxid als Antiklebemittel und die zweitgenannte Patentschrift schlägt den Zusatz von feinverteiltem metallischem Zinkpulver mit demselben Zweck vor. Diese bekannten Zusätze führen wohl zu einer Verminderung der Verklebung, sie genügen aber den heutigen Anforderungen der Technik nicht ganz.

Es ist nun gefunden worden, dass überraschenderweise durch Zugabe von Eisenpulver in Emailzusammensetzungen die obenerwähnten Probleme weitgehend vermieden werden. Die so erhaltenen Emailzusammensetzungen eignen sich sehr gut für den Ueberzug von Glasscheiben. Man erhält einen glatten, durchgehenden Ueberzug, der beim Erhitzen im Verformungsverfahren mit den die Gussform überziehenden Glasfasern nicht verklebt. Das Verformungsverfahren wird demnach durch die obenerwähnten Verklebungsvorgänge nicht behindert. Solche Emailzusammensetzungen zeichnen sich zusätzlich durch erhöhte Opazität und verbesserte Haftfähigkeit am Glas aus. Die Anwesenheit von Eisenpulver in UV-härtbaren Ueberzügen verhindert in beachtlichem Masse das Loslösen vom Email vom gläsernen Substrat.

Die vorliegende Erfindung betrifft demnach Emailzusammensetzungen enthaltend eine Glasfrittenzusammensetzung, ein Metalloxidpigment und ein dafür geeignetes Bindemittel, dadurch gekennzeichnet, dass sie zusätzlich 2-75 Gew.% Eisenpulver, bezogen auf die gesamte Emailzusammensetzung, enthalten.

Ein weiterer Gegenstand der Erfindung ist ein Verfahren zur Herstellung von beim Verformen in der Hitze nicht mit den die Gussform überziehenden Materialien verklebenden Emailzusammensetzungen enthaltend eine Glasfrittenzusammensetzung, ein Metalloxidpigment und ein dafür geeignetes Bindemittel, dadurch gekennzeichnet, dass zusätzlich 2-75 Gew.% Eisenpulver, bezogen auf die gesamte Emailzusammensetzung, eingearbeitet werden.

Jegliche weiche Glasfritte oder Glasfrittenmischung kann zur Herstellung der erfindungsgemässen Emailzusammensetzungen verwendet werden. Die Fritte wird im allgemeinen so vermahlen, dass sie ein Sieb mit Maschenweite 0,044 mm (325 mesh, US Standard) durchlaufen kann. Die wichtigste Aufgabe der Fritte besteht darin, das pigmentäre Produkt auf der Glasoberfläche zu binden. Die Glasfrittenzusammensetzung kann verschiedene geeignete Metalloxidkombinationen enthalten. Typische Oxide sind z.B. die Oxide von Zink, Blei, Silicium, Titan, Zirkon, Natrium, Bor, Lithium, Kalium, Calcium, Aluminium, Zinn, Vanadium, Molybden, Magnesium, Eisen, Mangan u.a.m. Auch verschiedene Fluoride können in der Glasfritte enthalten sein. Die Zusammensetzung des Ansatzes an oxid- und fluoridbildenden Substanzen kann aus verschiedenen Salzen, wie z.B. Hydroxide, Carbonate, Sulfate, Nitrate, Fluoride der oben erwähnten Metalle bestehen. Die Ingredienzien werden so ausgewählt, dass sie zu bestimmten erwünschten Fritteneigenschaften führen. Blei-, Zink/Alkali- und Bismuth/Alkali-Borsilicat-Fritten und insbesondere Blei-Borsilicat-Fritten sind für den erfindungsgemässen Einsatz bevorzugt.

Die Glasfritten werden durch Vermischen der oxid- und gegebenenfalls fluoridbildenden Ingredienzen, Verschmelzen des erhaltenen Gemisches bei 900 bis 1600°C zu geschmolzenem Glas und Abschrecken des letzteren durch Eintauchen in Wasser oder Durchleiten im Gegenlauf in einem gekühlten Walzenstuhl hergestellt. Der Schmelzvorgang findet im allgemeinen in Keramik- oder Platintiegel oder in einem geeigneten Schmelzofen statt. Die erhaltenen Frittensplitter werden zu feinen Partikeln zermahlen.

Metalloxidpigmente sind den Fachleuten wohl bekannt, darunter z.B. die Oxide des Chroms, Kobalts, Eisens, Nickels, Kupfer und Mangans. Obwohl letztere die bevorzugten schwarzen Spinellpigmente bilden, können zur Erzeugung von dunkelgrau Tönen und anderen Farben auch andere Metalloxide verwendet werden. Besonders bevorzugt werden Eisenspinellpigmente.

Je nach der Verwendung werden verschiedene Bindemittel ausgewählt. Es ist wesentlich, dass das Bindemittel die Frittenpartikel hinreichend suspendiert und dass er beim Einbrennen der Emailzusammensetzung vollständig ausbrennt. Zweckmässig handelt es sich um organische Bindemittel, wie z.B. Bindemittel auf Fichtenöl-Basis, pflanzliche Oele, Mineralöle, niedermolekulare Erdölfraktionen und Tridecylalkohol. Die Bindemittel können auch z.B. durch zähflüssige Harze, wie Vinylharze, durch Lösungsmittel oder Filmbildner, wie Cellulosematerialien modifiziert werden.

UV-härtbare Bindemittel eignen sich ebenfalls für den Einsatz gemäss der vorliegenden Erfindung. Solche UV-härtbare Bindemittel die in Fachkreisen wohl bekannt sind, setzen sich im allgemeinen aus polymerisierbaren Monomeren und/oder Oligomeren, die z.B. Acrylat- oder Methacrylat-Gruppen enthalten, und Photoiniziatoren sowie polymerisationshemmende Mittel zusammen. Geeignete Systeme dieser Art sind z.B. in den US-PS 4 306 012 und 4 649 062 beschrieben. Solche Systeme werden durch UV-Strahlung nach dem Aufbringen auf das Glassubstrat gehärtet.

Die erfindungsgemässen Emailzusammensetzungen (Teig) enthalten 2-75 Gew.%, bevorzugt 5-35 Gew.% und insbesondere 20-30 Gew.% Eisenpulver, 10-85 Gew.%, bevorzugt 30-65 Gew.% Glasfritte/Pigment-Zusammensetzung und 10-45 Gew.%, bevorzugt 14-30 Gew.% Bindemittel, bezogen auf die gesamte Emailzusammensetzung. Die Pigmentkomponente besteht aus 10-40 Gew.% eines kombinierten Systems einiger der obenerwähnten Metalloxiden. Die erhaltenen Emailzusammensetzungen sind zähflüssig, wobei die Viskosität je nach Zusammensetzung und Applikation variieren kann. Für das Auftragen mittels Siebdruck sind Viskositäten von 10000-80000, bevorzugt von 20000-65000 Centipoise bei 20°C, mit Brookfield-Vikosimeter (Spindel Nr. 7 bei 20 U/Min.) ermittelt, geeignet.

Eine ganze Reihe von fakultativen Ingredienzien kann der erfindungsgemässen Emailzusammensetzung noch zugesetzt werden. Diese können zu Pigmentierungszwecken, um die Viskosität zu beeinflussen oder um bestimmte Eigenschaften, wie Haftvermögen und Abreibfestigkeit, zu verbessern zugegeben werden. Bismuth und Bismuth enthaltende Verbindungen erhöhen das Haftvermögen. Bestimmte feuerfeste Stoffe, wie z.B. $ZrO_2$, verbessern die Abriebfestigkeit. Verbindungen auf Kieselsäure-Basis dienen zur Einstellung der Viskosität. Weiter können auch Suspensionsmittel, wie z.B. Isostearinsäure, zugesetzt werden.

Die erfindungsgemässen Emailzusammensetzungen werden wie folgt hergestellt: Nach dem Vermischen der Feststoffe werden die flüssigen Ingredienzien zugegeben und das Gemisch gründlich bis zur Bildung eines homogenen dickflüssigen Teigs vermischt oder geknetet. Der Teig wird anschliessend noch weiter dispergiert mittels üblicher Mühlen oder Dispergiergeräten.

Die Methoden zur Applikation der Emailüberzüge sind in Fachkreisen wohl bekannt. Die dispergierten Ueberzugsmassen können nach bekannten Beschichtungsverfahren, wie z.B. Siebdruck, Spritzen, Streichen und Walzenauftrag appliziert werden. Für die Beschichtung von Glaswaren wird der Siebdruck bevorzugt.

Wenn die Glasscheibe mit dem Email beschichtet ist, wird sie auf eine zur Einweichung des Glases genügende Temperatur erhitzt, so dass die Glasscheibe in die gewünschte Form gebracht werden kann. Die Erweichungstemperatur variiert im allgemeinen zwischen 600 und 760°C. Emails, die dank ihrer Zusammensetzung UV-strahlungsempfindlich sind, können einer solchen Strahlung vor dem Erhitzen zur Fixierung des Emails an der Glasscheibe ausgesetzt werden. Nach dem Erhitzen wird die Glasscheibe mit dem Emailüberzug in die mit Glasfasern bezogene Gussform eingeschoben und erhält in dieser Weise die gewünschte Form. Beim Erhitzen werden selbstverständlich alle im Email enthaltenen organischen Materialien vollständig ausgebrannt und der restliche Anteil der Emailzusammensetzung wird an das Glas dauerhaft gebunden. Durch den Zusatz des Eisenpulvers zum Email wird einerseits die Verklebung des Emails mit der Gussform vermieden und andererseits einen glatten durchgehenden Emailüberzug gewährleistet.

Ein weiterer Gegenstand der vorliegenden Erfindung ist demnach ein Verfahren zur Herstellung einer mit Email beschichteten geformten Glasscheibe, dadurch gekennzeichnet, dass eine Eisenpulver enthaltende Emailzusammensetzung gemäss obiger Beschreibung, auf eine Glasplatte aufgetragen wird, die beschichtete Glasplatte aufgeheizt wird um die Glasplatte zu erweichen, die flüchtigen Anteile der Emailzusammensetzung zu entfernen und die Emailzusammensetzung dauerhaft an das Glas zu binden, die erweichte Glasplatte mit dem Emailüberzug zur Formgebung in eine mit Glasfasern bezogene Gussform eingeschoben, dann wieder entfernt und schliesslich abgekühlt wird.

Nachdem die mit Email überzogene Glasscheibe von der Gussform entfernt worden ist, wobei keine Verklebung des Emails mit der Gussform festzustellen ist, kann die Glasscheibe durch Abkühlen endgültig in der gewünschten Form verfestigt werden. Normalerweise geschieht dies entweder durch schnelles Abkühlen in einem Glastemperverfahren oder durch Ausglühen (insbesondere wenn das Produkt für die Applikation in Windschutzscheiben vorgesehen ist). Man erhält ein Produkt, das ohne weiteres für verschiedene Applikationen geeignet ist, insbesondere für den obenerwähnten Einsatz in Kraftfahrzeugen.

Zu Emailzusammensetzungen kann, zur Erzeugung von elektrisch leitenden Ueberzügen, wie beispielsweise in Heckscheibenheizsystemen von Kraftfahrzeugen, auch Silber-Metall beigemengt werden. Für solche Anwendungen sind bestimmte Eigenschaften, wie Farbstabilität, Haftfestigkeit, Lötbarkeit, Ausbleiben von Silbermigration und Abriebfestigkeit, unerlässlich. Die erfindungsgemässen Eisenpulver enthaltenden Emailzusammensetzungen eignen sich ganz besonders zur Verwendung in Kombination mit solchen leitenden Beschichtungen, da sie in derartigen Systemen die obenerwähnten erforderlichen Eigenschaften gewährleisten.

Die folgenden Beispiele erläutern die Erfindung. Teile bedeuten dabei Gewichtsteile, wenn nicht anders definiert.

Beispiel 1:

Folgende Emailzusammensetzungen werden hergestellt:

Gewichts-Teile in %

|  | 1 | 2 | 3 | 4 | 5 | 6 | A | B | C |
|---|---|---|---|---|---|---|---|---|---|
| Emailpulver (1) | 61,5 | 61,5 | 59,8 | 59,8 | 70,4 | 70,4 | 81 | 81 | 81 |
| Bindemittel auf Fichtenölbasis | 15,4 | – | 17,1 | – | 17,6 | – | 19 | – | – |
| UV-härtbares Bindemittel (2) | – | 15,4 | – | – | – | 17,6 | – | 19 | – |
| UV-härtbares Bindemittel (3) | – | – | – | 17,1 | – | – | – | – | 19 |
| Eisenpulver (Korngrösse gemäss Siebanalyse: 325 mesh = Maschenweite 0,044 mm) | 23.1 | 23,1 | 23,1 | 23,1 | 12,0 | 12,0 | – | – | – |

(1) 58 Teile Blei-Borsilicat-Fritte
    42 Teile Eisenspinell-Pigmentmischung

(2) 1708® von Drakenfeld Colors

(3) 1718® von Drakenfeld Colors

Die Emails werden nach üblichen Methoden durch Vermischen der flüssigen und festen Anteile und anschliessende Dispergierung des Teigs in eine geeignete Mühle hergestellt.

Die Emails werden wie folgt geprüft: Sie werden auf Glasplatten (10,2x10,2x0,4 cm) aufgetragen und durch Erhitzen während 3 Minuten auf 705°C eingebrannt. Ein leicht gebogener, mit einem Keramikgewebe überzogener Pressbarren wird mit einem geschätzten Druck von 11-23 kg (25-50 Pounds) während 5 Sekunden mittels einer Rollbewegung auf der erweichten Glasplatte gepresst. Dann wird das Ausmass der Verklebung zwischen Email und Keramikgewebe visuell bestimmt.

Bei allen Prüflingen 1-6 findet im wesentlichen keine Verklebung statt. An den Glasplatten haftet praktisch kein Keramikgewebe. Bei den Prüflingen A, B und C hingegen findet eine Verklebung in unerwünschtem Masse statt. Beachtliche Mengen Keramikgewebe haften an den Glasplatten.

Beispiel 2:

Die Formulierung B dient als Grundzusammensetzung für die anschliessenden Versuche, wobei ein Teil des Gemisches gemäss Formulierung B durch die entsprechende in der nachfolgenden Tabelle angegebene Menge Eisenpulver ersetzt wird.

Die verschiedenen Emails werden jeweils im Siebdruckverfahren auf Glasplatten aufgetragen und unter einer Quecksilberdampflampe (ID/1 Hg) mit einer Durchlaufsgeschwindigkeit von 1067 cm/Minute gehärtet. Danach wird ein elektrisch leitender Ueberzug aus 70 Gew.% Silber, 3 Gew.% Glasfritte und 27 Gew.% Bindemittel auf Basis von Tridecylalkohol ebenfalls im Siebdruckverfahren so über dem gehärteten Eisenpulver enthaltenden Email aufgetragen, dass Ueberlappungsstellen entstehen und das System wird getrocknet. Die Emails werden dann in den senkrecht gestellten Platten unter den in der nachfolgenden Tabelle angegebenen Bedingungen (Einbrenntemperatur und Einbrennzeit) eingebrannt. Alsdann werden in den so hergestellten Leiterplatten die Eigenschaften der Leiterbahnen, wie Opazität, verklebungshemmende Wirkung, Haftfestigkeit, Oberflächenhärte (Emailfestigkeit), sowie Beständigkeit gegen Silbermigration, gemäss in Fachkreisen üblichen Bewertungsmethoden evaluiert.

Es wurde unter folgenden Versuchsbedingungen (VB) geprüft:

VB 1 = 705°C Einbrenntemperatur während 2 Min. 15 Sek

VB 2 = 705°C Einbrenntemperatur während 2 Min. 45 Sek.

VB 3 = 730°C Einbrenntemperatur während 3 Min.

Die Resultate sind in nachfolgender Tabelle wiedergegeben:

| VB | Fe (Gew.%) | OH | SM | OP | HF | VH |
|----|-----------|----|----|----|----|----|
| 1 | 5 | B | G | G | A | – |
| 1 | 10 | G | A | A | A | – |
| 1 | 20 | A | A | A | A | G |
| 1 | 30 | A | A | A | A | A |
| 2 | 5 | G | G | G | A | – |
| 2 | 10 | A | A | A | A | – |
| 2 | 20 | A | A | A | A | G |
| 2 | 30 | A | A | A | A | A |
| 3 | 5 | G | G | G | A | B |
| 3 | 10 | G | G | G | A | G |
| 3 | 15 | G | G | G | A | G |
| 3 | 20 | G | G | G | A | G |
| 3 | 25 | G | G | G | A | A |
| 3 | 30 | B | B | G | A | A |
| 3 | 35 | – | – | – | A | A |
| 3 | 40 | – | – | – | A | G |

OH = Oberflächenhärte

SM = Beständigkeit gegen Silbermigration

OP = Opazität

HF = Haftfestigkeit

VH = Verklebungshemmende Wirkung

B = befriedigend

G = gut

A = ausgezeichnet


Wird das Email gemäss Formulierung B den gleichen Tests unterworfen, dann beobachtet man insbesondere eine erhöhte Silbermigration und eine geringere verklebungshemmende Wirkung.

Beispiel 3

Weitere Leiterplatten werden unter Versuchsbedingungen und mit dem Anteil an Eisenpulver, wie sie in der nachfolgenden Tabelle angegeben sind, genau wie in Beispiel 2 beschrieben hergestellt. Danach wird die Lötbarkeit der Leiterbahnen wie folgt bestimmt: Die zu prüfende Leiterbahn wird leicht abgeschliffen und darauf, durch Verwendung von 1,27 cm eines Bi/As/Sn-Lötdrahtes, bei einer Löttemperatur von 400°C, ein verzinntes Kupferkabel gelötet. Die Lötstelle wird auf Raumtemperatur abgekühlt. Mit Hilfe eines Dynamometers (®Instron 1000) wird die zum Lostrennen des Kupferkabels nötige Zugkraft (in kg) gemessen. Die Resultate sind in nachfolgender Tabelle wiedergegeben:

| VB | Fe (gew.%) | Zugkraft in kg |
|----|-----------|----------------|
| 1  | 5         | 8,3            |
| 1  | 0         | 7,4            |
| 2  | 5         | 4,1            |
| 2  | 0         | 0,0            |
| 1  | 10        | 8,3            |
| 1  | 0         | 5,9            |
| 2  | 10        | 4,7            |
| 2  | 0         | 0,0            |
| 1  | 20        | 6,4            |
| 1  | 0         | 5,2            |
| 2  | 20        | 5,9            |
| 2  | . 0       | 0,0            |

## Patentansprüche

## Patentansprüche für folgende Verstragsstaaten : DE, FR, GB, IT, NL, SE

1. Emailzusammensetzungen enthaltend eine Glasfrittenzusammensetzung, ein Metalloxidpigment und ein dafür geeignetes Bindemittel, dadurch gekennzeichnet, dass sie zusätzlich 2-75 Gew.% Eisenpulver, bezogen auf die gesamte Emailzusammensetzung, enthalten.

2. Emailzusammensetzungen gemäss Anspruch 1, dadurch gekennzeichnet, dass die Glasfrittenzusammensetzung aus einer Kombination von Metalloxiden besteht.

3. Emailzusammensetzungen gemäss Anspruch 2, dadurch gekennzeichnet, dass die Metalloxide aus der Gruppe bestehend aus Zink, Blei, Silicium, Titan, Zirkon, Natrium, Bor, Lithium, Kalium, Calcium, Aluminium, Zinn, Vanadium, Molybden, Magnesium, Eisen und Mangan ausgewählt sind.

4. Emailzusammensetzungen gemäss Anspruch 3, dadurch gekennzeichnet, dass die Glasfritte eine Blei-Borsilicat-Fritte ist.

5. Emailzusammensetzungen gemäss Anspruch 1, dadurch gekennzeichnet, dass sie ein organisches Bindemittel enthalten.

6. Emailzusammensetzungen gemäss Anspruch 5, dadurch gekennzeichnet, dass das organische Bindemittel ein Bindemittel auf Fichtenöl-Basis, ein pflanzliches Oel, ein Mineralöl, eine niedermolekulare Erdölfraktion oder ein Bindemittel auf Tridecylalkohol-Basis ist.

7. Emailzusammensetzungen gemäss Anspruch 6, dadurch gekennzeichnet, dass das organische Bindemittel ein Bindemittel auf Fichtenöl-Basis ist.

8. Emailzusammensetzungen gemäss Anspruch 1, dadurch gekennzeichnet, dass das Metalloxidpigment ein Eisenspinellpigment ist.

9. Emailzusammensetzung gemäss Anspruch 1, dadurch gekennzeichnet, dass das Bindemittel UV-härtbar ist.

**10.** Ein mit einer Emailzusammensetzung gemäss Anspruch 1 partiell beschichtetes Glassubstrat.

**11.** Glassubstrat gemäss Anspruch 10, dadurch gekennzeichnet, dass die Emailbeschichtung wenigstens teilweise überlappend mit einer Silber-Metall enthaltenden elektrisch leitenden Beschichtung versehen ist.

**12.** Verfahren zur Herstellung von beim Verformen in der Hitze nicht mit den die Gussform überziehenden Materialien verklebenden Emailzusammensetzungen enthaltend eine Glasfrittenzusammensetzung, ein Metalloxidpigment und ein dafür geeignetes Bindemittel, dadurch gekennzeichnet, dass zusätzlich 2-75 Gew.% Eisenpulver, bezogen auf die gesamte Emailzusammensetzung, eingearbeitet werden.

**13.** Verfahren zur Herstellung einer mit Email beschichteten geformten Glasscheibe, dadurch gekennzeichnet, dass eine Emailzusammensetzung gemäss Anspruch 1 auf eine Glasplatte aufgetragen wird, die beschichtete Glasplatte aufgeheizt wird um die Glasplatte zu erweichen, die flüchtigen Anteile der Emailzusammensetzung zu entfernen und die Emailzusammensetzung dauerhaft an das Glas zu binden, die erweichte Glasplatte mit dem Emailüberzug zur Formgebung in eine mit Glasfasern bezogene Gussform eingeschoben, dann wieder entfernt und schliesslich abgekühlt wird.

**Patentansprüche für folgenden Vertragsstaat : ES**

**1.** Verfahren zur Herstellung von beim Verformen in der Hitze nicht mit den die Gussform überziehenden Materialien verklebenden Emailzusammensetzungen enthaltend eine Glasfrittenzusammensetzung, ein Metalloxidpigment und ein dafür geeignetes Bindemittel, dadurch gekennzeichnet, dass zusätzlich 2-75 Gew.% Eisenpulver, bezogen auf die gesamte Emailzusammensetzung, eingearbeitet werden.

**2.** Verfahren gemäss Anspruch 1, dadurch gekennzeichnet, dass die Glasfrittenzusammensetzung aus einer Kombination von Metalloxiden besteht.

**3.** Verfahren gemäss Anspruch 2, dadurch gekennzeichnet, dass die Metalloxide aus der Gruppe bestehend aus Zink, Blei, Silicium, Titan, Zirkon, Natrium, Bor, Lithium, Kalium, Calcium, Aluminium, Zinn, Vanadium, Molybden, Magnesium, Eisen und Mangan ausgewählt sind.

**4.** Verfahren gemäss Anspruch 3, dadurch gekennzeichnet, dass die Glasfritte eine Blei-Borsilicat-Fritte ist.

**5.** Verfahren gemäss Anspruch 1, dadurch gekennzeichnet, dass ein organisches Bindemittel verwendet wird.

**6.** Verfahren gemäss Anspruch 5, dadurch gekennzeichnet, dass das organische Bindemittel ein Bindemittel auf Fichtenöl-Basis, ein pflanzliches Oel, ein Mineralöl, eine niedermolekulare Erdölfraktion oder ein Bindemittel auf Tridecylalkohol-Basis ist.

**7.** Verfahren gemäss Anspruch 6, dadurch gekennzeichnet, dass das organische Bindemittel ein Bindemittel auf Fichtenöl-Basis ist.

**8.** Verfahren gemäss Anspruch 1, dadurch gekennzeichnet, dass das Metalloxidpigment ein Eisenspinellpigment ist.

**9.** Verfahren gemäss Anspruch 1, dadurch gekennzeichnet, dass das Bindemittel UV-härtbar ist.

**10.** Verfahren zur Herstellung einer mit Email beschichteten geformten Glasscheibe, dadurch gekennzeichnet, dass eine nach dem Verfahren gemäss Anspruch 1 hergestellte Emailzusammensetzung auf eine Glasplatte aufgetragen wird, die beschichtete Glasplatte aufgeheizt wird um die Glasplatte zu erweichen, die flüchtigen Anteile der Emailzusammentzung zu entfernen und die Emailzusammensetzung dauerhaft an das Glas zu binden, die erweichte Glasplatte mit dem Emailüberzug zur Formgebung in eine mit Glasfasern bezogene Gussform eingeschoben, dann wieder entfernt und schliesslich abgekühlt wird.

## Claims

### Claims for the following Contracting States : DE, FR, GB, IT, NL, SE

1. An enamel composition comprising a glass frit composition, a metal oxide pigment and a binder suitable therefor, which additionally contains 2-75% by weight of iron powder, based on the entire enamel composition.

2. An enamel composition according to claim 1, wherein said glass frit composition comprises a combination of metal oxides.

3. An enamel composition according to claim 2, wherein said metal oxides are selected from the group consisting of zinc, lead, silicon, titanium, zirconium, sodium, boron, lithium, potassium, calcium, aluminium, tin, vanadium, molybdenum, magnesium, iron and manganese oxides.

4. An enamel composition according to claim 3, wherein said glass frit is a lead borosilicate frit.

5. An enamel composition according to claim 1, which contains an organic binder.

6. An enamel composition according to claim 5, wherein said organic binder is a binder based on pine oil, a vegetable oil, a mineral oil, a low molecular weight petroleum fraction or a binder based on tridecyl alcohol.

7. An enamel composition according to claim 6, wherein said organic binder is a binder based on pine oil.

8. An enamel composition according to claim 1, wherein said metal oxide pigment is an iron spinel pigment.

9. An enamel composition according to claim 1, wherein said binder is UV-curable.

10. A glass substrate partially coated with an enamel composition according to claim 1.

11. A glass substrate according to claim 10, wherein the enamel coating is provided with a silver metal-containing electrically conductive coating in an at least partially overlapping relationship.

12. A process for producing an enamel composition comprising a glass frit composition, a metal oxide pigment and a binder suitable therefor, which on deformation under heat does not adhere to the materials covering the casting mould, which process comprises additionally incorporating 2-75% by weight of iron powder, based on the entire enamel composition.

13. A process for producing an enamel-coated moulded glass sheet, wherein an enamel composition according to claim 1 is coated onto a glass sheet, the coated glass sheet is heated to soften the glass sheet, to remove the volatile constituents in said enamel composition and to bond the enamel composition permanently to the glass, the softened glass sheet having the enamel coating is then pushed into a casting mould covered with glass fibres for shaping, then removed again and finally cooled.

### Claims for the following Contracting State : ES

1. A process for producing an enamel composition comprising a glass frit composition, a metal oxide pigment and a binder suitable therefor, which on deformation in the heat does not adhere to the materials covering the casting mould, which process comprises additionally incorporating 2-75% by weight of iron powder, based on the entire enamel composition.

2. A process according to claim 1, wherein said glass frit composition comprises a combination of metal oxides.

3. A process according to claim 2, wherein said metal oxides are selected from the group consisting of zinc, lead, silicon, titanium, zirconium, sodium, boron, lithium, potassium, calcium, aluminium, tin, vanadium, molybdenum, magnesium, iron and manganese oxides.

4. A process according to claim 3, wherein said glass frit is a lead borosilicate frit.

5. A process according to claim 1, wherein an organic binder is used.

6. A process according to claim 5, wherein said organic binder is a binder based on pine oil, a vegetable oil, a mineral oil, a low molecular weight petroleum fraction or a binder based on tridecyl alcohol.

7. A process according to claim 6, wherein said organic binder is a binder based on pine oil.

8. A process according to claim 1, wherein said metal oxide pigment is an iron spinel pigment.

9. A process according to claim 1, wherein said binder is UV-curable.

10. A process for producing an enamel-coated moulded glass sheet, wherein an enamel composition produced by the process according to claim 1 is coated onto a glass sheet, the coated glass sheet is heated to soften the glass sheet, to remove the volatile constituents in said enamel composition and to bond the enamel composition permanently to the glass, the softened glass sheet having the enamel coating is then pushed into a casting mould covered with glass fibres for shaping, then removed again and finally cooled.


**Revendications**

**Revendications pour les Etats contractants suivants : DE, FR, GB, IT, NL, SE**

1. Compositions d'émail renfermant une fritte de verre, un pigment qui est un oxyde métallique et un liant approprié, compositions caractérisées en ce qu'elles contiennent en outre de 2 à 75 % en poids de poudre de fer par rapport à l'ensemble de la composition d'émail.

2. Compositions d'émail selon la revendication 1 caractérisées en ce que la fritte de verre est constituée d'une association d'oxydes de métaux.

3. Compositions d'émail selon la revendication 2 caractérisées en ce que les oxydes métalliques sont pris dans l'ensemble constitué par les oxydes de zinc, de plomb, de silicium, de titane, de zirconium, de sodium, de bore, de lithium, de potassium, de calcium, d'aluminium, d'étain, de vanadium, de molybdène, de magnésium, de fer et de manganèse.

4. Compositions d'émail selon la revendication 3 caractérisées en ce que la fritte de verre est une fritte à base de borosilicate de plomb.

5. Compositions d'émail selon la revendication 1 caractérisées en ce qu'elles contiennent un liant organique.

6. Compositions d'émail selon la revendication 5 caractérisées en ce que le liant organique est un liant à base de tallöl, une huile végétale, une huile minérale, une fraction de pétrole à faible masse moléculaire ou un liant à base de tridécanol.

7. Compositions d'émail selon la revendication 6 caractérisées en ce que le liant organique est un liant à base de tallöl.

8. Compositions d'émail selon la revendication 1 caractérisées en ce que le pigment d'oxyde métallique est un pigment de spinelle de fer.

9. Compositions d'émail selon la revendication 1 caractérisées en ce que le pigment liant est durcissable par les rayons ultraviolets.

10. Substrat en verre partiellement revêtu d'une composition d'émail selon la revendication 1.

11. Substrat en verre selon la revendication 10 caractérisé en ce que le revêtement d'émail est muni, avec chevauchement au moins partiel, d'un revêtement électro-conducteur contenant de l'argent métallique.

12. Procédé pour préparer des compositions d'émail qui, lors du formage à chaud, ne collent pas aux matières recouvrant le moule de coulée, qui contiennent une fritte de verre, un oxyde métallique comme pigment et un liant approprié, procédé caractérisé en ce qu'on incorpore en outre de 2 à 75 % en poids de poudre de fer par rapport à l'ensemble de la composition d'émail.

13. Procédé pour fabriquer une plaque de verre moulée revêtue d'émail, procédé caractérisé en ce qu'on applique sur une plaque de verre une composition d'émail selon la revendication 1, on chauffe la plaque de verre revêtue pour la ramollir, pour éliminer les constituants volatils de la composition d'émail et pour fixer durablement au verre la composition d'émail, on introduit la plaque de verre ramollie portant le revêtement d'émail, pour lui donner la forme, dans un moule de coulée garni de fibres de verre, puis on l'en extrait et enfin on la refroidit.

**Revendications pour l'Etat contractant suivant : ES**

1. Procédé pour préparer des compositions d'émail qui, lors du formage à chaud, ne collent pas aux matières recouvrant le moule de coulée, qui contiennent une fritte de verre, un oxyde métallique comme pigment et un liant approprié, procédé caractérisé en ce qu'on incorpore en outre de 2 à 75 % en poids de poudre de fer par rapport à l'ensemble de la composition .

2. Procédé selon la revendication 1 caractérisé en ce que la fritte de verre est constituée d'une association d'oxydes métalliques.

3. Procédé selon la revendication 2 caractérisé en ce que les oxydes métalliques sont des oxydes de métaux, pris dans l'ensemble constitué par le zinc, le plomb, le silicium, le titane, le zirconium, le sodium, le bore, le lithium, le potassium, le calcium, l'aluminium, l'étain, le vanadium, le molybdène, le magnésium, le fer et le manganèse.

4. Procédé selon la revendication 3 caractérisé en ce que la fritte de verre est une fritte à base de borosilicate de plomb.

5. Procédé selon la revendication 1 caractérisé en ce qu'on utilise un liant organique.

6. Procédé selon la revendication 5 caractérisé en ce que le liant organique est un liant à base de tallöl, une huile végétale, une huile minérale, une fraction de pétrole à faible masse moléculaire ou un liant à base de tridécanol.

7. Procédé selon la revendication 6 caractérisé en ce que le liant organique est un liant à base de tallöl.

8. Procédé selon la revendication 1 caractérisé en ce que l'oxyde métallique est un piquent de spinelle de fer.

9. Procédé selon la revendication 1 caractérisé en ce que le liant est durcissable par des rayons ultraviolets.

10. Procédé pour fabriquer une plaque de verre moulée revêtue d'émail, procédé caractérisé en ce qu'on applique sur une plaque de verre une composition d'émail préparée par le procédé de la revendication 1, on chauffe la plaque de verre revêtue pour la ramollir, pour éliminer les constituants volatils de la composition d'émail et pour fixer durablement du verre la composition d'émail, on introduit la plaque de verre ramollie portant le revêtement d'émail, pour lui donner la forme, dans un moule de coulée garni de fibres de verre, puis on l'en extrait et enfin on la refroidit.